# EUROPEAN PATENT APPLICATION

(11) **EP 4 729 256 A1**
(43) Date of publication of application: **22.04.2026**
(21) Application number: 25209241.6
(22) Date of filing: 16.10.2025
(51) Int. Cl.: B26D 7/12, B24B 49/00, G01H 11/00, B24B 3/46, B26D 1/153, B26D 7/06, B26D 7/26

(54) **FOOD PRODUCT SLICER AND ASSOCIATED KNIFE SHARPNESS EVALUATION SYSTEM**

(30) Priority: 18.10.2024 US 202463709144 P; 10.10.2025 US 202519355561
(71) Applicant: Illinois Tool Works Inc., Glenview IL 60025 (US)
(72) Inventor: BIRD, Matthew W., Glenview, 60025 (US); GARDE, Sriya Uday, Glenview, 60025 (US); HEBERT, Adam M., Glenview, 60025 (US)
(74) Representative: HGF

(57) **Abstract**

A food slicer for slicing food items includes a slicer body and a slicer knife mounted for rotation relative to the slicer body. The slicer knife has a peripheral cutting edge with an associated cutting zone, and an associated knife drive motor. A food product carriage is mounted to the slicer body for reciprocating movement back and forth past the cutting zone of the slicer knife. A knife edge evaluation system includes at least one vibration sensor positioned and configured for detecting vibrations produced during slicer knife sharpening.

## Description

### TECHNICAL FIELD

This application relates generally to food product slicers of the type commonly used to slice bulk food products and, more specifically, to a knife sharpness evaluation system in such a food product slicer.

### BACKGROUND

Typical reciprocating food slicers have a rotatable, circular or disc-like slicing blade, an adjustable gauge plate for defining the thickness of the slice and a carriage for supporting the food as it is moved back and forth past the cutting edge of the knife during slicing. A drive motor may be linked to drive the carriage back and forth during an automatic slicing operation carried out by a controller of the slicer. The gauge plate is situated along the edge of the knife toward the front of a slicing stroke and is laterally movable with respect to the knife for setting the thickness of the slices to be cut. A rotatable adjustment knob or indexing mechanism is provided for setting a spacing between the plane of the gauge plate surface and the plane of the knife edge, so that operators can select a thickness of slices to be produced.

Such slicers have a knife that requires regular sharpening to maintain good slice performance. A sharpener is generally included with or integral to the machine to allow the operator to sharpen the slicer knife.

It is difficult for an operator to objectively determine if the slicer knife needs to be sharpened. It can be apparent to an experienced operator that the knife is dull because the machine is not slicing as well as it should. But, by the time such an operator determination is made, it is arguably too late. It is also difficult to objectively determine when the sharpening process has been adequately and properly completed. To overcome these challenges, many operators will either over sharpen or under sharpen. Over sharpening often occurs to ensure there is always proper performance, but generally reduces the life of the knife significantly. Under sharpening often occurs either because frequent sharpening is not being performed correctly (operator error or bad sharpener) or the operator is not aware that sharpening is needed.

Attempts at solving this issue have focused on trying to predict when sharpening will be needed (by counting knife revolutions, product tray strokes, or time) or by measuring load on the machine (specifically motor current). Theorizations have been made for how to automate the sharpening process as well. For example, U.S. Patent No. 8,220,383, the entirety of which is incorporated herein by reference, discloses a sharpener with a timed sharpening operation where a slicer operating parameter (e.g., slicing strokes) can be monitored and a sharpen knife annunciator (e.g., a light element) triggered when the operating parameter reaches a certain level (e.g., set threshold number of slicing strokes).

A shortcoming of the predictive methods is that they are not very accurate. Prediction based on time, number of strokes, or knife revolutions ignores a large variable in knife wear, which is the type of product being sliced and how quickly the product is sliced.

A shortcoming of the load measuring method is that it is not feasible to accurately measure the load on the motor in a way that gives good data on the knife efficiency. The load on the knife motor is determined by the sharpness of the knife, how hard the operator pushes, and the type of product being sliced. Since this method cannot predict or measure the other two variables, it is difficult to get good data. Even if this data could be gathered and was the only variable directly related to knife sharpness, the knife would need to become extremely dull before it would be feasible to determine a reduction in performance is occurring.

It would be desirable to provide a slicer that can adequately determine one or more of how sharp the knife is, if a knife needs to be sharpened, if sharpening has been completed, and/or if the knife is of good/acceptable quality (or needs to be replaced).

### SUMMARY

In one aspect, a food slicer for slicing food items includes a slicer body, a slicer knife mounted for rotation relative to the slicer body, the slicer knife having a peripheral cutting edge with an associated cutting zone, and an associated knife drive motor, and a food product carriage mounted to the slicer body for reciprocating movement back and forth past the cutting zone of the slicer knife. A knife edge evaluation system includes at least one vibration sensor positioned and configured for detecting vibrations produced during slicer knife sharpening.

In another aspect, in a food product slicer having a slicer knife mounted for rotation, the slicer knife having a peripheral cutting edge, a method of carrying out a monitored knife sharpening operation involves a controller: monitoring vibration signals output by at least one vibration sensor and evaluating the vibration signals to identify when a sharpening operation is taking place; upon identifying that the sharpening operation is taking place, evaluating the vibration signals to identify whether the peripheral cutting edge is sharp; and upon determining that the peripheral cutting edge is sharp, triggering output of a knife sharp alert output to communicate to a user that knife sharpening should be stopped. This method can be carried out in the food slicer of the preceding aspect.

The details of one or more embodiments are set forth in the accompanying drawings and the description below. Other features, objects, and advantages will be apparent from the description and drawings, and from the claims.

### BRIEF DESCRIPTION OF DRAWINGS

Figs. 1 and 2 show perspective views of a food product slicer; and
Fig. 3 shows a schematic block diagram of portions of the slicer;
Figs. 4 and 5 show perspective views of portions of the slicer including the sharpener; and
Fig. 6 shows a partial cross-section of portions of the slicer.
.

### DETAILED DESCRIPTION

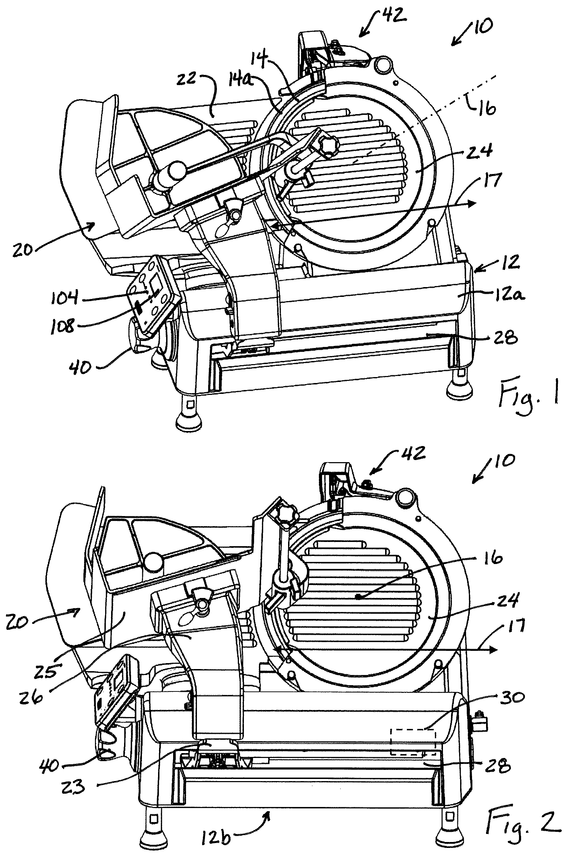

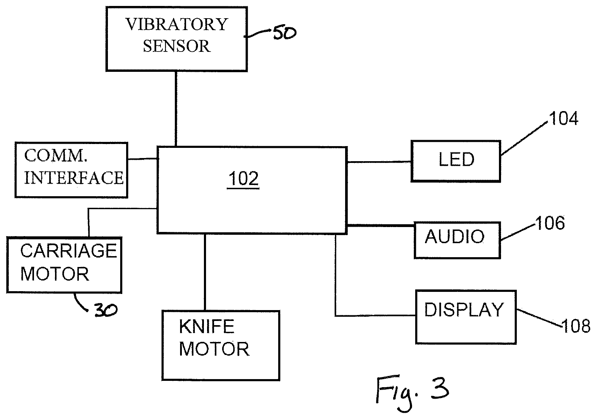

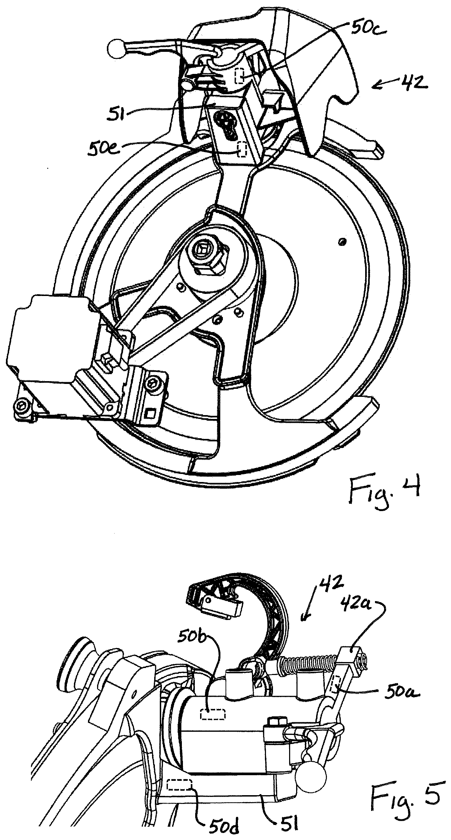

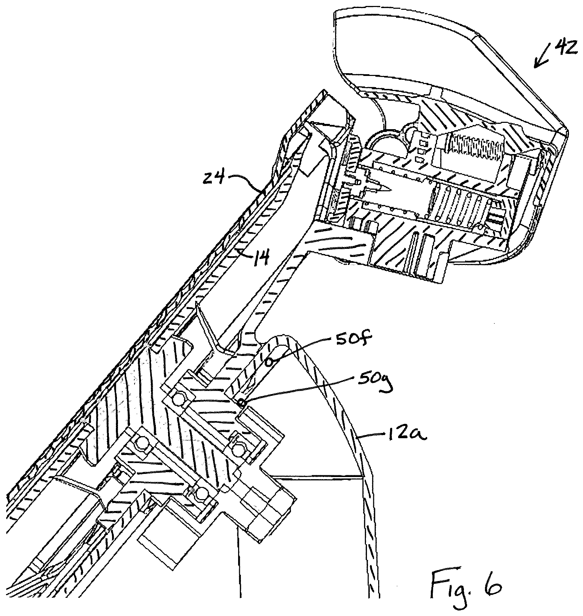

Referring to Figs. 1-6, a food product slicer 10 includes body or base 12 (e.g., housing 12a and/or cast base or base frame 12b) and a circular, motor-driven slicing knife 14 that is mounted to the body for rotation about an axis 16. Fig. 2 depicts a right-side view of the slicer. The left side of Fig. 2, where the controls are located, is generally referred to as the front side of the slicer (which is where an operator stands for slicing), the right side of Fig. 2 is generally referred to as the rear side of the slicer. A food product can be supported on a manually operable (or motor driven) food carriage 20 which moves the food product to be sliced past the cutting edge 14a of the rotating slicing knife 14. The food carriage 20 reciprocates back and forth along a linear path 17 so that the lower end of the bulk food product slides along the surface of a gauge plate 22, is cut by the knife 14 and then slides along a knife cover plate 24. The food carriage 20 includes a tray 25 mounted on a tray arm 26 that is mounted on a transport 23 and that orients the food carriage tray at the appropriate angle (typically perpendicular) to the knife cutting-edge plane. The food carriage arm reciprocates in a slot 28 at a lower portion of the base 12. The carriage 20 can be moved manually (e.g., by a handle) and/or the carriage 20 may also be automatically driven (e.g., as by an internal motor 30 that drives a belt that is linked internally to the arm 26 or transport 23).

A gauge plate system includes a rotatable knob 40 (connected to an opening in the base 12). Rotation of the knob 40 adjusts a spacing between the plane of the gauge plate surface and the plane of the knife edge so that operators can select a thickness of slices to be produced.

A sharpening assembly 42 is mounted on the slicer. The sharpening assembly may take any suitable configuration. In some embodiments, the sharpening assembly could be removable, or the sharpening assembly could be a separate component that does not mount to the slicer. By way of example, a sharpener assembly similar to those described in U.S. Patent No. 7,134,937 may be used.

The food product slicer also includes a knife evaluation system that utilizes a vibration sensor 50, such as a microphone (e.g., a contact microphone) or an accelerometer, an evaluation unit (part of a controller 102) to process the data from the microphone or accelerometer, and a notification/interface to the operator. As used herein, the term controller is intended to broadly encompass any circuit (e.g., solid state, application specific integrated circuit (ASIC), an electronic circuit, a combinational logic circuit, a field programmable gate array (FPGA)), processor(s) (e.g., shared, dedicated, or group - including hardware or software that executes code), software, firmware and/or other components, or a combination of some or all of the above, that carries out the control functions of the machine or the control functions of any component thereof.

This setup will passively monitor the slicer. When the operator begins the sharpening process (i.e., one or more sharpening stone components of the sharpener is/are applied to the peripheral cutting edge of the rotating knife), the evaluation unit/controller will recognize that sharpening is occurring (based upon the vibration data output by the vibration sensor 50), and start to evaluate the vibrations traveling through the machine to determine if the sharpener is sharpening a dull or a sharp knife (e.g., by identifying the vibrations as being consistent with known or stored vibration characteristics for a dull slicer knife or as being consistent with known or stored vibration characteristics for a sharp slicer knife, as may be previously determined by testing and stored in memory).

In implementations, the vibration sensor 50 is physically mounted to some part of the slicer that does not greatly attenuate frequencies below 20kHz, as those frequencies are most important to knife sharpness evaluation. The vibration sensor could, for example, be mounted to part of the slicer knife sharpener 42 (e.g., the sharpener arm 42a per sensor 50a, or the sharpener body per vibration sensor 50b or 50c) or on a mount for the slicer knife sharpener (e.g., per vibration sensor 50d or 50e on mount 51). Alternatively, the vibration sensor could be located on the slicer body somewhere or internally of the slicer body (e.g., on the internal base frame 12b or an internal portion of the housing 12a of the slicer body, per vibration sensor 50f or 50g). Multiple vibration sensors in different locations could also be used.

The evaluation unit/controller used to process the vibration signal data may utilize some form or hardware preamp or general filtering of the raw data coming from the vibration sensor. The evaluation unit/controller could utilize a frequency transform (i.e. Fourier Transform) to convert time domain based data into frequency domain based data. The evaluation unit/controller will analyze the data to differentiate between a knife being sharpened that is dull vs. a knife being sharpened that is appropriately sharp. There are many solutions and algorithms which could be utilized to make this determination. Such techniques could involve use of a frequency analysis to look at standard deviation of the natural frequency for a sharp knife and/or a dull knife.

The system could have a dormant and active mode. Dormant mode would sample data every now and then. Active mode would sample data at a quicker speed and could be actuated when the evaluation unit determines that sharpening is occurring.

The system may give live updates as to the status of the knife (dull vs. sharp), with the updates provided on/at an operator interface of the machine. When an operator initiates sharpening (by moving the sharpener into contact with the knife edge), the evaluation unit/controller will determine if the frequency profile indicates dull or sharp. If the operator began sharpening and the knife was already sharp, the system would recognize that appropriate sharpness has been achieved and alert the operator that the knife is sharp. If the operator began sharpening and the knife was dull, the system would recognize that appropriate sharpness has not been achieved and continue checking the knife until appropriate sharpness was achieved. At that point, the system would alert the operator that the knife has been sharpened.

The operator interface/output could be a simple LED 104 that turns on when the knife is sharpened. This output could also have additional information given instead through a display/screen 108 on the machine. Other forms of operator feedback that are possible include: haptic feedback, sound (per audio device 106), etc.

In one implementation, the controller 102 is configured to enable monitored knife sharpening operations, in which the controller: (1) monitors vibration signals output by the vibration sensor and evaluates those signals to identify when a sharpening operation has been initiated or is taking place (when a sharpening component of the knife sharpener has been moved into contact with the peripheral cutting edge of the knife); (2) upon identifying that the sharpening operation is taking place, evaluates the vibration signals (e.g., compares the vibration signals to prestored signal characteristics, perhaps using a frequency analysis to look at standard deviation of a specified frequency or specified frequencies) to identify whether the peripheral cutting edge is sharp (i.e., sharpening can be stopped) or dull (i.e., sharpening should continue); (3a) if a determination is made that the peripheral cutting edge is sharp, trigger a knife sharp alert output (e.g., a specific color LED being lighted, a message displayed on the display screen (e.g., "knife is sharp" and/or "stop sharpening") and/or a specific audio output) or (3b) if a determination is made that the peripheral cutting edge is still dull, forgo the knife sharp alert output and possibly output a knife dull alert output (e.g., a specific, different color LED being lighted, a message displayed on the display screen (e.g., "knife is dull" and/or "continue sharpening") and/or a specific audio output. In this manner, the scale user can continued the sharpening operation until the knife is identified as sharp, and then stop sharpening, to reduce the incidence of under-sharpening and over-sharpening. During step (2) the controller may also evaluate the vibration signals to identify if the peripheral cutting edge has reached the end of its useful cutting life.

This setup could also be utilized for other monitoring activities (besides monitoring knife sharpness). Proper analysis could easily allow for monitoring of other slicer systems. For example, if a bearing was failing on the knife shaft, this would result in an energy increase at the frequency that corresponds to the knife shaft RPM. This system could be applied to every moving system or subsystem in a slicer. Pre-determining specific frequency profiles that would certainly result in failure, would allow a evaluation unit to inform the operator of existing issues on the machine (i.e., bearing starting to fail, or the need to call Service).

This system could also track knife sharpening hours. Since passive monitoring would be able to determine if the knife is being sharpened, the machine controller 102 could determine how much time has been spent sharpening the knife, and compare that time to a previously known or determined amount of time that represents a limit of sharpening ability (e.g., an amount of sharpening time that indicates that a knife has likely has been sharpened too much and is at the end of its life). The machine controller could then alert the operator that the knife is at the end of its life and should be replaced.

It is to be clearly understood that the above description is intended by way of illustration and example only and is not intended to be taken by way of limitation. Variations are possible.

## Claims

1. A food slicer for slicing food items, comprising:
a slicer body;
a slicer knife mounted for rotation relative to the slicer body, the slicer knife having a peripheral cutting edge with an associated cutting zone, and an associated knife drive motor;
a food product carriage mounted to the slicer body for reciprocating movement back and forth past the cutting zone of the slicer knife;
a knife edge evaluation system, including at least one vibration sensor positioned and configured for detecting vibrations produced during slicer knife sharpening.

2. The food slicer of claim 1, wherein the knife edge evaluation system further comprises a controller configured to evaluate vibration signals output by the at least one vibration sensor, wherein the knife edge evaluation system is configured to evaluate the vibration signals to identify a peripheral cutting edge sharpness condition.

3. The food slicer of claim 2, wherein the controller is configured to identify the peripheral cutting edge sharpness condition when the vibration signals of the at least one vibration sensor indicate that the peripheral cutting edge is being sharpened.

4. The food slicer of claim 3, wherein the controller is configured to pre-process the vibration signals before determining the peripheral cutting edge sharpness condition.

5. The food slicer of claim 2, wherein the controller is configured to (i) identify when the peripheral cutting edge is being sharpened based upon the vibration signals of the at least one vibration sensor and (ii) provide a knife sharp alert output to alert an operator when the slicer knife is sharp.

6. The food slicer of claim 5, further comprising an audio output device, a visual output device or a haptic output device at which the controller provides the knife sharp alert output.

7. The food slicer of claim 5, further comprising:
a knife sharpener mounted on the food slicer for sharpening the peripheral cutting edge.

8. The food slicer of claim 5, wherein the controller is configured to identify whether the vibration signals are consistent with (i) known or stored vibration characteristics for a dull slicer knife and/or (ii) known or stored vibration characteristics for a sharp slicer knife.

9. The food slicer of claim 5, wherein:
the controller is configured to evaluate the vibration signals to determine an end of life condition indicative of the slicer knife having reached an end of useful life, and to provide an end of lifer alert output to alert an operator that the slicer knife requires replacement.

10. The food slicer of claim 9, wherein the food slicer includes an audio output device, a visual output device or a haptic output device at which the controller provides the knife sharp alert output and/or the end of life alert output.

11. The food slicer of claim 1, further comprising:
a knife sharpener mounted on the food slicer and including at least one sharpening component movable into engagement with the peripheral cutting edge for sharpening the peripheral cutting edge;
wherein the at least one vibration sensor comprises a vibration sensor mounted on a portion of the knife sharpener and/or a mount structure to which the knife sharpener is mounted.

12. The food slicer of claim 11, wherein the at least one vibration sensor comprises a contact microphone or an accelerometer.

13. The food slicer of claim 1, further comprising:
a knife sharpener mounted on the food slicer and including at least one sharpening component movable into engagement with the peripheral cutting edge for sharpening the peripheral cutting edge;
wherein the at least one vibration sensor comprises a vibration sensor mounted internally of the slicer body.

14. In a food product slicer having a slicer knife mounted for rotation, the slicer knife having a peripheral cutting edge, a method of carrying out a monitored knife sharpening operation involves a controller:
monitoring vibration signals output by at least one vibration sensor and evaluating the vibration signals to identify when a sharpening operation is taking place;
upon identifying that the sharpening operation is taking place, evaluating the vibration signals to identify whether the peripheral cutting edge is sharp;
upon determining that the peripheral cutting edge is sharp, triggering output of a knife sharp alert output to communicate to a user that knife sharpening should be stopped.

15. The method of claim 14, further comprising the controller:
upon determining that the peripheral cutting edge is not sharp, forgoing any knife sharp alert output and triggering output of a knife dull alert output to communicate to the user that knife sharpening should continue.
